# EUROPÄISCHE PATENTSCHRIFT

(11) **EP 2 257 733 B1**
(45) Veröffentlichungstag und Bekanntmachung des Hinweises auf die Patenterteilung: **09.01.2013**
(21) Anmeldenummer: 09727712.3
(22) Anmeldetag: 08.01.2009
(51) Int. Cl.: F21S 10/00, F21V 17/12

(54) **LEUCHTBAUGRUPPE**
LIGHT MODULE
BLOC DE COMPOSANTS LUMINESCENTS

(30) Priorität: 04.04.2008 DE 102008017612
(43) Veröffentlichungstag der Anmeldung: 08.12.2010
(73) Patentinhaber: Insta Elektro GmbH, 58509 Lüdenscheid (DE)
(72) Erfinder: SCHAUER, Udo, 58849 Herscheid (DE); TWEER, Markus, 58513 Lüdenscheid (DE)
(86) Internationale Anmeldenummer: PCT/EP2009/000043
(87) Internationale Veröffentlichungsnummer: WO 2009/121439

(56) Entgegenhaltungen:
- WO-A-03/048637
- WO-A-2006/097067

## Beschreibung

Die vorliegende Erfindung geht von einer gemäß dem Oberbegriff des Hauptanspruches konzipierten Leuchtbaugruppe, vorgesehen zum Einsatz in Leuchten aus.

Derartige Leuchtbaugruppen sind im Zusammenwirken mit ihren sie aufnehmenden Leuchten in der Regel dafür vorgesehen, innerhalb bzw. außerhalb von Gebäuden für die gezielte Ausleuchtung ihrer Umgebung bzw. für die Anleuchtung von direkt in ihrer Umgebung befindlichen Gegenständen und/oder für eine gezielte Einkoppelung von Licht in Gegenstände zu sorgen. Oftmals sind heutzutage die Anforderungen an Leuchtbaugruppen bzw. an Leuchten derart, dass sie auch unter widrigen Umgebungsbedingungen über einen langen Zeitraum störungsfrei funktionieren sollen und zum anderen in der Lage sind, Licht in einer bestimmten bzw. gewünschten Lichtfarbe abzugeben, ohne dass es in Randbereichen des erzeugten Lichtkegels zu störenden Lichterscheinungen kommt.

Durch die WO 2006/097 067 A ist eine dem Oberbegriff des Hauptanspruches entsprechende Leuchtbaugruppe bekannt geworden. Diese Leuchtbaugruppe weist eine an ein Versorgungsnetz anschließbare Leiterplatte auf und ist zumindest mit einer Leuchtdiodenanordnung versehen, wobei der Leuchtdiodenanordnung ein im Wesentlichen stabförmig ausgebildeter Lichtleiter zugeordnet ist. Der untere Endbereich des Lichtleiters ist mit einer Lichteinkoppelfläche versehen, in die das von der Leuchtdiodenanordnung abgestrahlte Licht abgekoppelt wird. Der obere Endbereich des Lichtleiters ist mit einer Lichtauskoppelfläche versehen, über welche das eingekoppelte Licht abgestrahlt wird. Zudem sind an den unteren Endbereich des Lichtleiters mehrere Ansätze angeformt, die positionssichernd in entsprechend ausgebildete und angeordnete Ausnehmungen der Leiterplatte eingreifen. Zudem ist eine Anlagefläche an den unteren Endbereich des Lichtleiters angeformt, an die zur positionsgerechten Festlegung des Lichtleiters an der Leiterplatte eine Fixiereinrichtung zur Anlage kommt.

Des Weiteren ist durch die DE 10 2006 040 393 A1 eine Leuchtbaugruppe bekannt geworden, welche Bestandteil einer LED-Operationsleuchte ist und welche eine an ein Versorgungsnetz anschließbare Leiterplatte aufweist, auf welcher zumindest eine Leuchtdiodenanordnung vorhanden ist, wobei der Leuchtdiodenanordnung ein im Wesentlichen stabförmig ausgebildeter Lichtleiter zugeordnet ist, dessen unterer Endbereich mit einer Lichteinkoppelfläche versehen ist, in die das von der Leuchtdiodenanordnung abgestrahlte Licht eingekoppelt wird und dessen oberer Endbereich mit einer Lichtauskoppelfläche versehen ist, über welche das eingekoppelte Licht wieder abgestrahlt wird. Bei einer solchen Leuchtbaugruppe ist jedoch nicht in jedem Fall gewährleistet, dass der Lichtleiter bei der Montage der Leuchtdiodenanordnung bzw. dem darauf befindlichen Leuchtdiodenchip exakt genug zugeordnet wird, wodurch es in manchen Fällen in den Randbereichen des erzeugten Lichtkegels zu störenden Lichteffekten kommen kann.

Der vorliegenden Erfindung liegt deshalb die Aufgabe zugrunde, eine Leuchtbaugruppe zu schaffen, bei der auf besonders einfache Art und Weise sichergestellt ist, dass der Lichtleiter bei der Montage der Leuchtbaugruppe der Leuchtdiodenanordnung bzw. dem darauf befindlichen Leuchtdiodenchip immer besonders exakt zugeordnet wird.

Diese Aufgabe wird durch die im Hauptanspruch angegebenen Merkmale gelöst. Bei einer solchermaßen ausgebildeten Leuchtbaugruppe ist besonders vorteilhaft, dass der Lichtleiter trotz seiner besonders exakten Zuordnung zur Leuchtdiodenanordnung in bestimmten Maßen flexibel an der Leiterplatte festgelegt ist, so dass auf den Lichtleiter einwirkende mechanisch und/oder thermisch verursachte Kräfte gut ausgeglichen werden und dieser bzw. die Leuchtbaugruppe z. B. bei der Montage oder im Betrieb weitgehend vor Beschädigungen geschützt ist.

Weitere vorteilhafte Ausgestaltungen des erfindungsgemäßen Gegenstandes sind in den Unteransprüchen angegeben. Anhand eines Ausführungsbeispieles sei der erfindungsgemäße Gegenstand näher beschrieben, dabei zeigen:
- Fig. 1:: prinziphaft eine Leuchtbaugruppe räumlich, vergrößert in Explosionsdarstellung;
- Fig. 2:: prinziphaft mehrere auf einem Träger festgelegte Leuchtbaugruppen in räumlicher Darstellung.

Wie aus den Figuren hervorgeht, besteht eine solche Leuchtbaugruppe hauptsächlich aus einer an ein Versorgungsnetz anschließbaren Leiterplatte 1, auf welcher eine Leuchtdiodenanordnung 2 vorhanden ist. Der Leuchtdiodenanordnung ist ein im Wesentlichen stabförmig ausgebildeter Lichtleiter 3 zugeordnet, dessen unterer Endbereich mit einer Lichteinkoppelfläche 4 versehen ist, in die das von der Leuchtdiodenanordnung 2 abgestrahlte Licht eingekoppelt wird und dessen oberer Endbereich mit einer Lichtauskoppelfläche 5 versehen ist, über welche das eingekoppelte Licht abgestrahlt wird.

Wie des weiteren aus den Figuren hervorgeht, besteht der Lichtleiter 3 einer solchen Leuchtbaugruppe aus einem achteckigen Stab, an dessen unteren Endbereich eine Anlagefläche 6 angeformt ist, die an ihrer der Leiterplatte 1 zugeordneten Fläche einstückig drei Ansätze 7 aufweist. Die Ansätze 7 sind jeweils in Art eines runden Stifts ausgeführt und greifen jeweils positionssichernd in eine zugehörige Ausnehmung 8 ein, welche in der Leiterplatte 1 vorhanden sind. In der Leiterplatte 1 sind also drei Ausnehmungen 8 vorhanden, die jeweils in Art einer runden Bohrung ausgeführt sind. Die drei in der Leiterplatte 1 vorhandenen Ausnehmungen 8 und die drei am Lichtleiter 3 vorhandenen Ansätze sind dabei derart angeordnet, dass immer eine definierte Zuordnung von Leiterplatte 1 und der darauf befindlichen Leuchtdiodenanordnung 2 und des zu montierenden Lichtleiters 3 gewährleistet ist. Die Lichteinkoppelfläche 4 des Lichtleiters wird bei der Montage also förmlich zwangsweise dem Leuchtdiodenchip 9 der Leuchtdiodenanordnung 2 auf einfache Art und Weise besonders exakt positioniert bzw. ausgerichtet zugeordnet. Das bedeutet, dass das von dem Leuchtdiodenchip 9 abgestrahlte Licht nahezu vollständig der Lichteinkoppelfläche 4 des Lichtleiters 3 zugeführt wird. Innerhalb des Lichtleiters 3 wird das Licht durch Totalreflektion an seine Lichtauskoppelfläche 5 weitergeleitet und dort abgestrahlt. Damit diese exakte Zuordnung von Lichtleiter 3 und Leuchtdiodenanordnung 2 im Betrieb dauerhaft erhalten bleibt, ist eine Fixiereinrichtung 10 vorgesehen, die das sicherstellt.

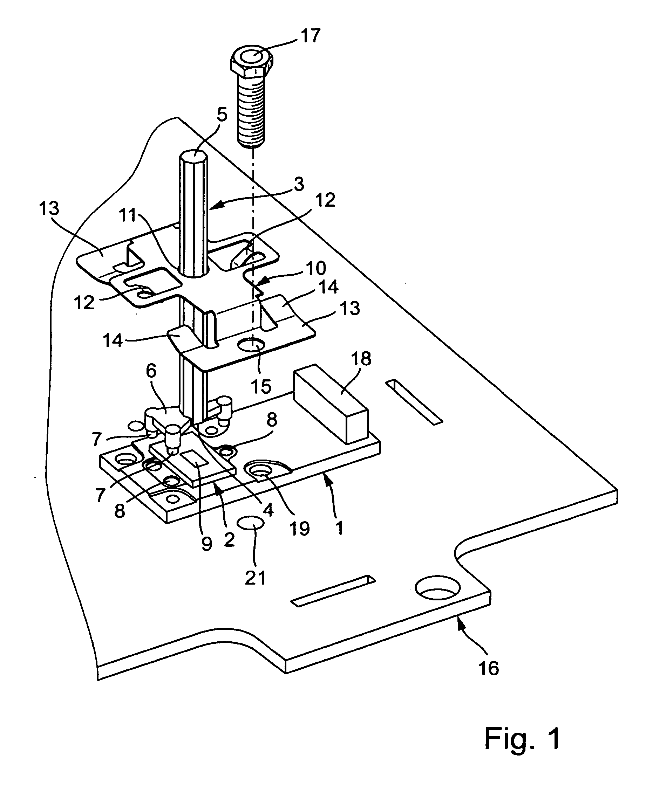

Wie insbesondere aus Fig. 1 hervorgeht, ist die Fixiereinrichtung 10 einstückig als Stanz-Biegeteil ausgeführt und besteht aus einem gute Federeigenschaften aufweisenden Metallblech. An zentraler Stelle weist die Fixiereinrichtung 10 in ihrer Basisfläche eine Öffnung 11 auf, die für den Durchtritt des stabförmig ausgebildeten Lichtleiters 3 vorgesehen ist. Ausgehend von zwei Seiten der Basisfläche sind gegenüberliegend angeordnet zwei Rahmenbereiche vorhanden, die an ihren der Öffnung 11 gegenüberliegenden Schenkeln jeweils einstückig mit einer Federzunge 12 versehen sind. Treppenartig abgesetzt ist an die beiden anderen Seiten der Basisfläche der Fixiereinrichtung 10 jeweils eine Befestigungslasche 13 angeformt, an welche jeweils einstückig zwei Federarme 14 angeformt sind. Die Fixiereinrichtung 10 weist also insgesamt zwei Federzungen 12 und vier Federarme 14 auf. Außerdem weist jede der Befestigungslasche 13 eine Befestigungsöffnung 15 auf, die zur Festlegung der Fixiereinrichtung 10 an einen Träger 16 dient. Zur Festlegung der Fixiereinrichtung 10 ist ein Befestigungselement 17 in Art einer Schraube vorgesehen, welches in eine Gewindebohrung 21 des Trägers 16 eingebracht wird. Ohne weiteres ist aber auch die Verwendung anderer Befestigungselemente vorstellbar.

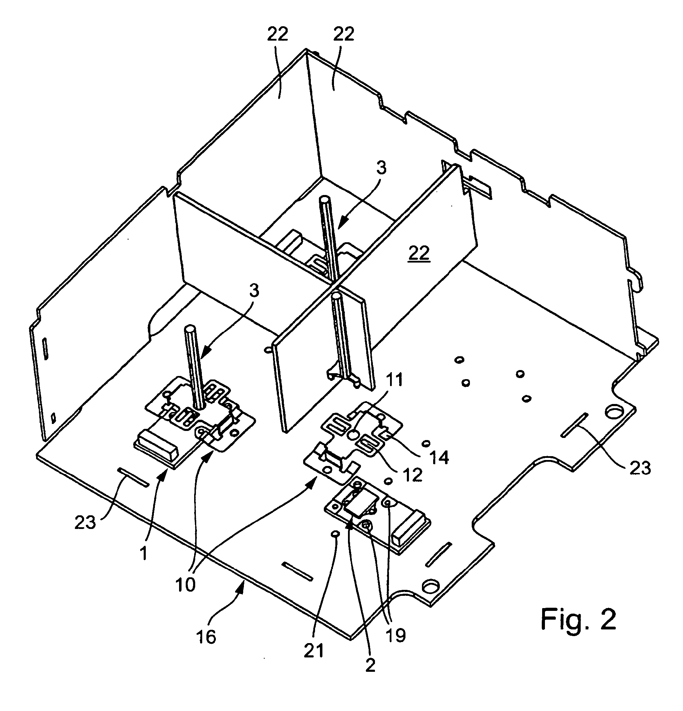

Wie des weiteren insbesondere aus Fig. 2 hervorgeht, ist der Träger 16 als Zwischenboden einer die Leuchtbaugruppe aufnehmenden Leuchte ausgeführt. Der Träger 16 kann aber auch ein anderer Bestandteil der Leuchte sein. Der vorliegende Träger 16 ist aus einem gute Wärmeteileigenschaften aufweisenden Material, in diesem Fall aus Aluminium hergestellt. Des weiteren ist ersichtlich, dass der Träger 16 zur Festlegung von vier Leuchtbaugruppen vorgesehen ist, welche jeweils durch Lichtabschottungsmittel 22 umgeben sind, damit es nicht zu einer undefinierten Lichtüberstrahlung von Leuchtbaugruppe zu Leuchtbaugruppe kommt. Normalerweise sind solche Lichtabschottungsmittel 22 kammerartig ausgeführt und mit ihrer einen offenen Seite der zugehörigen Leuchtbaugruppe zugeordnet und mit ihrer anderen offenen Seite dem Lichtaustrittsbereich der Leuchte zugeordnet. Die dem Lichtaustrittsbereich zugeordnete andere offene Seite des Lichtabschottungsmittels 22 ist mit einer -der Einfachheit halber nicht dargestellten-Lichtbeeinflussungseinrichtung versehen, welche in der Lage ist, das von der Leuchtbaugruppe abgestrahlte Licht mit einer bestimmten Abstrahlcharakteristik zu versehen. Im vorliegenden Fall besteht die Lichtbeeinflussungseinrichtung aus mehreren plattenförmigen Elementen.

Des weiteren ist im vorliegenden Fall der auf der Leuchtdiodenanordnung 2 vorhandene Leuchtdiodenchip 9 als sogenannter Mehrfarben-LED-Chip (RGB) ausgeführt, wobei der Mehrfarben-LED-Chip eine Dotierung aufweist die rotes Licht, zwei Dotierungen aufweist die grünes Licht und eine Dotierung aufweist die blaues Licht abgibt. Im vorliegenden Fall werden die in die Lichteinkoppelfläche 4 des Lichtleiters 3 eingekoppelten Lichtfarben innerhalb des Lichtleiters 3 gemischt, so dass von der Lichtauskoppelfläche 5 schon gemischtes Licht entsprechend der gewünschten Lichtfarbe in Richtung der Lichtaustrittsfläche der Leuchte abgegeben wird. Um eine entsprechend gewünschte Lichtfarbe auf einfache Art und Weise erzeugen zu können, ist jede Leiterplatte 1 mit einer Steckvorrichtung 18 versehen, über die der Anschluss der Leiterplatte 1 an das Versorgungsnetz und an eine Steuereinrichtung gewährleistet ist. Mittels der Steuereinrichtung können wunschgemäß beliebige Lichtfarben eingestellt und Lichtszenen erzeugt werden.

Wie des weiteren aus den beiden Figuren hervorgeht, weist die Fixiereinrichtung 10 an zentraler Stelle die für den Durchtritt des stabförmigen Lichtleiter 3 vorgesehene Öffnung 11 auf. Zur sicheren, positionsgerechten Festlegung des Lichtleiters 3 an der Leiterplatte 1 und zur sicheren, positionsgerechten Festlegung der Leiterplatte 1 auf dem Träger 16 sind an die Fixiereinrichtung 10 einerseits mit dem stabförmigen Lichtleiter 3 und andererseits mit der Leiterplatte 1 in Wirkverbindung kommende Federzungen 12 und Federarme 14, wie bereits vorstehend beschrieben, angeformt. Außerdem weist die Leiterplatte 1 zwei Positionierausnehmungen 19 auf, welche mit zwei entsprechend ausgeführten und angeordneten Positioniererhebungen 20 in Wirkverbindung kommen, die einstückig aus dem Träger 16 ausgestellt sind. Die Leiterplatte 1 ist somit auf einfache Art und Weise positionsgerecht am Träger 16 gehalten. Damit die positionsgerechte Anordnung sowohl der Leiterplatte 1 am Träger 16, als auch des Lichtleiters 3 an der Leiterplatte 1 dauerhaft sichergestellt ist, kommen die beiden Federzungen der Fixiereinrichtung 10 an den Lichtleiter 3 angeformten Anlagefläche 6 zur Anlage und kommen gleichzeitig die vier Federarme 14 auf der dem Lichtleiter 3 zugewandten Oberseite der Leiterplatte 1 zur Anlage. Außerdem wird die Fixiereinrichtung 10 im Zusammenwirken mit den beiden Befestigungsöffnungen 15 der Befestigungslaschen 13 positionssicher am Träger 16 festgelegt, wobei zur Festlegung zwei als Befestigungsschrauben ausgeführte Befestigungselemente 17 vorgesehen sind.

Wie bereits erwähnt umgeben die Lichtabschottungsmittel 22 die Leuchtbaugruppen kammerartig. Dazu ist eine aus Blech hergestellte, vier Kammern aufweisende Abschottungsanordnung vorgesehen, welche mit angeformten Rastnasen mit im Träger 16 vorhandenen Rastaufnehmungen 23 in Wirkverbindung kommen. Somit ist auch auf einfache Art gewährleistet, dass die kammerartigen Lichtabschottungsmittel 22 die zugehörigen Leuchtbaugruppen lagegerecht umgeben.

Das bedeutet, die Federarme 14 drücken die Leiterplatte 1 auf den Träger 16 und stellen dadurch einen guten Wärmeleitkontakt her. Gleichzeitig wird die Leiterplatte 1 durch die Wirkverbindung der beiden Positionierausrichtungen 19 und der beiden Positioniererhebungen 20 positionssicher am Träger 16 fixiert und gleichzeitig der Lichtleiter durch die Federzungen 12 in Wirkverbindung mit der Anlagefläche 6 unter Federkraft positionssicher an der Leiterplatte 1 gehalten. Somit ist gewährleistet, dass sich der Lichtleiter 3 auf besonders einfache Art und Weise montieren und dabei zwangsläufig besonders exakt der Leuchtdiodenanordnung 2 bzw. dem darauf befindlichen Leuchtdiodenchip 9 zuordnen lässt. Gleichzeitig ist sichergestellt, dass der Lichtleiter 3 trotz seiner besonders exakten Zuordnung zur Leuchtdiodenanordnung 2 bzw. dem darauf befindlichen Leuchtdiodenchip 9 in bestimmten Maßen flexibel an der Leiterplatte 1 festgelegt ist, so dass Beschädigungen des Lichtleiters 3 durch einwirkende mechanisch und/oder thermisch verursachte Kräfte z. B. bei der Montage oder im Betrieb weitgehend vermieden werden.

## Patentansprüche

1. Leuchtbaugruppe mit einer an ein Versorgungsnetz anschließbaren Leiterplatte, auf welcher zumindest eine Leuchtdiodenanordnung vorhanden ist, wobei der Leuchtdiodenanordnung ein im Wesentlichen stabförmig ausgebildeter Lichtleiter zugeordnet ist, dessen unterer Endbereich mit einer Lichteinkoppelfläche versehen ist, in die das von der Leuchtdiodenanordnung abgestrahlte Licht eingekoppelt wird und dessen oberer Endbereich mit einer Lichtauskoppelfläche versehen ist, über welche das eingekoppelte Licht abgestrahlt wird, wobei an den unteren Endbereich des Lichtleiters (3) mehrere Ansätze (7) angeformt sind, die positionssichernd in entsprechend ausgebildete und angeordnete Ausnehmungen (8) der Leiterplatte (1) eingreifen, und dass an den unteren Endbereich des Lichtleiters (3) eine Anlagefläche (6) angeformt ist, an die zur positionsgerechten Festlegung des Lichtleiters (3) an der Leiterplatte (1) eine Fixiereinrichtung (10) zur Anlage kommt, **dadurch gekennzeichnet, dass** die Fixiereinrichtung (10) an zentraler Stelle eine für den Durchtritt des Lichtleiters (3) vorgesehene Öffnung (11) aufweist, und dass an die Fixiereinrichtung (10) zumindest eine Federzunge (12) angeformt ist, welche zur positionsgerechten Festlegung des Lichtleiters (3) an der Leiterplatte (1) an die, an den Lichtleiter (1) angeformte Anlagefläche (6) zur Anlage kommt.

2. Leuchtbaugruppe nach Anspruch 1, **dadurch gekennzeichnet, dass** an den unteren Endbereich des Lichtleiters (3) drei Ansätze (7) angeformt sind, und dass in der Leiterplatte (1) drei entsprechend ausgebildete und angeordnete Ausnehmungen (8) vorhanden sind.

3. Leuchtbaugruppe nach Anspruch 1 oder 2, **dadurch gekennzeichnet, dass** zumindest einer der Ansätze (7) in Art eines runden Stifts und zumindest eine der Ausnehmungen (8) der Leiterplatte (1) in Art einer runden Bohrung ausgebildet ist.

4. Leuchtbaugruppe nach einem der Ansprüche 1 bis 3, **dadurch gekennzeichnet, dass** an die Fixiereinrichtung (10) zwei Federzungen (12) angeformt sind, welche zur positionsgerechten Festlegung des Lichtleiters (3) an der Leiterplatte (1) an die, an den Lichtleiter (3) angeformte Anlagefläche (6) zur Anlage kommen.

5. Leuchtbaugruppe nach einem der Ansprüche 1 bis 4, **dadurch gekennzeichnet, dass** die Leiterplatte (1) mit ihrer dem Lichtleiter (3) abgewandten Unterseite auf einem Träger (16) zur Anlage kommt.

6. Leuchtbaugruppe nach Anspruch 5, **dadurch gekennzeichnet, dass** in der Leiterplatte (1) zumindest eine Positionierausnehmung (19) vorhanden ist, welche mit zumindest einer an den Träger (16) angeformten Positioniererhebung (20) in Wirkverbindung kommt.

7. Leuchtbaugruppe nach einem der Ansprüche 5 oder 6, **dadurch gekennzeichnet, dass** die Fixiereinrichtung (10) am Träger (16) festgelegt ist und mit zwei angeformten Federarmen (14) zur Festlegung der Leiterplatte (1) am Träger (16) auf der, dem Lichtleiter (3) zugewandten Oberseite der Leiterplatte (1) zur Anlage kommt.

8. Leuchtbaugruppe nach einem der Ansprüche 5 bis 7, **dadurch gekennzeichnet, dass** der Träger (16) als Wandung einer die Leuchtbaugruppe aufnehmenden Leuchte ausgeführt ist.

9. Leuchtbaugruppe nach einem der Ansprüche 5 bis 8, **dadurch gekennzeichnet, dass** der Träger (16) als Zwischenboden einer die Leuchtbaugruppe aufnehmenden Leuchte ausgeführt ist.

10. Leuchtbaugruppe nach einem der Ansprüche 1 bis 9, **dadurch gekennzeichnet, dass** die Leiterplatte (1) und der Lichtleiter (3) von einem Lichtabschottungsmitte (22) umgeben sind.

11. Leuchtbaugruppe nach einem der Ansprüche 1 bis 10, **dadurch gekennzeichnet, dass** oberhalb der Lichtauskoppelfläche des Lichtleiters (3) zumindest eine Lichtbeeinflussungseinrichtung vorgesehen ist.

12. Leuchtbaugruppe nach einem der Ansprüche 1 bis 11, **dadurch gekennzeichnet, dass** die Fixiereinrichtung (10) einstückig ausgebildet ist.

13. Leuchtbaugruppe nach einem der Ansprüche 1 bis 12, **dadurch gekennzeichnet, dass** zumindest eine Leuchtdiodenanordnung (2) einen Leuchtdiodenchip (9) aufweist, der zur Abgabe von Licht mehrerer Lichtfarben geeignet ist.

14. Leuchtbaugruppe nach einem der Ansprüche 1 bis 13, **dadurch gekennzeichnet, dass** zumindest einer Leuchtdiodenanordnung (2) ein auf der Leiterplatte (1) festgelegter Reflektor zugeordnet ist.

## Claims

1. Light module having a printed circuit board which can be connected to a supply network and on which at least one light emitting diode arrangement is provided, for which purpose a light guide of an essentially rod-shaped design is allocated to the light emitting diode arrangement the lower end zone of which is provided with a light coupling surface into which the light radiated by the light emitting diode arrangement is coupled, and the upper end zone of which is provided with a light decoupling surface by way of which the coupled-in light is emitted, for the purpose of which several projections (7) are formed onto the lower end zone of the light guide (3) which engage in a position-securing manner in correspondingly shaped and configured recesses (8) in the printed circuit board (1), and that a contact surface (6) is formed onto the lower end zone of the light guide (3) on which a locating facility (10) comes to rest for the purpose of securing the light guide (3) in its correct position on the printed circuit board (1), **characterised in that** the locating facility (10) shows an opening (11) at a central point intended for the light guide (3) to pass through and that at least one flexible tongue (12) is formed onto the locating facility (10) which comes to rest on the contact surface (6) formed onto the light guide (3) for the purpose of securing the light guide (3) in the correct position on the printed circuit board (1).

2. Light module according to Claim 1, **characterised in that** three projections (7) are formed onto the lower end zone of the light guide (3) and that three correspondingly shaped and configured recesses (8) are provided in the printed circuit board (1).

3. Light module according to Claim 1 or Claim 2, **characterised in that** at least one of the projections (7) is of a round pin-like design and at least one of the recesses (8) on the printed circuit board (1) is designed as a round hole.

4. Light module according to any of Claims 1 to 3, **characterised in that** two flexible tongues (12) are formed onto the locating facility (10) which come to rest on the contact surface (6) formed onto the light guide (3) for the purpose of securing the light guide (3) in the correct position on the printed circuit board (1).

5. Light module according to any of Claims 1 to 4, **characterised in that** the printed circuit board (1) comes to rest on a carrier (16) with its underside facing away from the light guide (3).

6. Light module according to Claim 5, **characterised in that** at least one locating recess (19) is provided in the printed circuit board (1) which interacts with at least one locating bulge (20) formed onto the carrier (16).

7. Light module according to Claim 5 or Claim 6, **characterised in that** the locating facility (10) is positioned on the carrier (16) and comes to rest with two moulded-on resilient arms (14) on the upper side of the printed circuit board (1) facing the light guide (3) for the purpose of positioning the printed circuit board (1) on the carrier (16).

8. Light module according to any of Claims 5 to 7, **characterised in that** the carrier (16) is executed as the wall of a luminaire accommodating the light module.

9. Light module according to any of Claims 5 to 8, **characterised in that** the carrier (16) is executed as the intermediate base of a luminaire accommodating the light module.

10. Light module according to any of Claims 1 to 9, **characterised in that** the printed circuit board (1) and the light guide (3) are encompassed by a light partitioning facility (22).

11. Light module according to any of Claims 1 to 10, **characterised in that** at least one light influencing facility is provided above the light decoupling surface of the light guide (3).

12. Light module according to any of Claims 1 to 11, **characterised in that** the locating facility (10) is of a one-piece design.

13. Light module according to any of Claims 1 to 12, **characterised in that** at least one light emitting diode arrangement (2) has a light-emitting diode chip (9) which is suitable for emitting light of various light colours.

14. Light module according to any of Claims 1 to 13, **characterised in that** a reflector located on the printed circuit board (1) is allocated to at least one light-emitting diode arrangement (2).

## Revendications

1. Sous-ensemble d'éclairage, avec une carte de circuits imprimés raccordable à un réseau d'alimentation, sur lequel il y a au moins une disposition de diode lumineuse, pour lequel un câble de fibre optique disposition de diode lumineuse de forme essentiellement en barre est affecté à la disposition de diode lumineuse, la partie finale inférieure de ce câble est doté d'une surface d'entrée de lumière dans laquelle entre la lumière diffusée par la disposition de diode lumineuse et dont la partie finale supérieure est dotée d'une surface de sortie de lumière par laquelle la lumière entrée est diffusée, pour lequel, dans la partie finale inférieure du câble de fibre optique (3), sont formées plusieurs embases (7) qui se prennent en assurant la position dans des évidements (8) formés et disposés en conséquence de la carte de circuits imprimés (1) et qu'à la partie finale inférieure du câble de fibre optique (3) est formée une surface d'appui (6) sur laquelle un dispositif de fixation (10) prend appui pour la fixation conforme à la position du câble de fibre optique (3) sur la carte de circuits imprimés (1), **caractérisé en ce que** le dispositif de fixation (10) présente à un endroit central un orifice (11) prévu pour le passage du câble de fibre optique (3) et que, sur le dispositif de fixation (10), est formée au moins une lame flexible (12) qui prend appui sur la surface d'appui (6) formée sur le câble de fibre optique (1) pour la fixation conforme à la position du câble de fibre optique (3) sur la carte de circuits imprimés (1).

2. Sous-ensemble d'éclairage selon revendication 1, **caractérisé en ce que** trois embases (7) sont formées sur la partie finale inférieure du câble de fibre optique (3) et qu'il y a trois évidements (8) formés et disposés en conséquence dans la carte des circuits imprimés (1).

3. Sous-ensemble d'éclairage selon revendication 1 ou 2, **caractérisé en ce qu**'au moins une des embases (7) est formée de la manière d'une broche ronde et qu'au moins un des évidements (8) de la carte des circuits imprimés (1) est formé de la manière d'un alésage rond.

4. Sous-ensemble d'éclairage selon l'une des revendications 1 à 3, **caractérisé en ce que** sur le dispositif de fixation (10) sont formées deux lames flexibles (12) qui prennent appui sur la surface d'appui (6) formée sur le câble de fibre optique (1) pour la fixation conforme à la position du câble de fibre optique (3) sur la carte de circuits imprimés (1).

5. Sous-ensemble d'éclairage selon l'une des revendications 1 à 4, **caractérisé en ce que** la face inférieure, tournée vers le câble de fibre optique, de la carte de circuits imprimés (1) prend appui sur un support (16).

6. Sous-ensemble d'éclairage selon revendication /*manuscrit*/ 5, **caractérisé en ce que** dans la carte de circuits imprimés (1) il y a au moins un évidement de positionnement (19) qui forme une connexion active avec au moins une bosse de positionnement (20) formée sur le support (16).

7. Sous-ensemble d'éclairage selon l'une des revendications 5 ou /*manuscrit*/ *6,* **caractérisé en ce que** le dispositif de fixation (10) est fixé sur le support (16) et prend appui sur la face supérieure, tournée vers le câble de fibre optique (3), de la carte de circuits imprimés (1) avec deux bras à ressort (14) pour la fixation de la carte de circuits imprimés (1) sur le support (16).

8. Sous-ensemble d'éclairage selon l'une des revendications 5 à 7 /*manuscrit*/*,* **caractérisé en ce que** le support (16) est exécuté comme la cloison d'une lampe logeant le sous-ensemble d'éclairage.

9. Sous-ensemble d'éclairage selon l'une des revendications 5 à 8 /*manuscrit*/*,* **caractérisé en ce que** le support (16) est exécuté comme faux fond cloison d'une lampe logeant le sous-ensemble d'éclairage.

10. Sous-ensemble d'éclairage selon l'une des revendications 1 à 9, **caractérisé en ce que** la carte de circuits imprimés (1) et le câble de fibre optique (3) sont entourés par un moyen de cloisonnement de lumière (22).

11. Sous-ensemble d'éclairage selon l'une des revendications 1 à 10, **caractérisé en ce que,** au-dessus de la surface de sortie de la lumière du câble de fibre optique (3) est prévu au moins un dispositif influençant la lumière.

12. Sous-ensemble d'éclairage selon l'une des revendications 1 à 11, **caractérisé en ce que** le dispositif de fixation (10) est formé d'une seule pièce.

13. Sous-ensemble d'éclairage selon l'une des revendications 1 à 12, **caractérisé en ce qu**'au moins une disposition de diode lumineuse (2) présente une puce de diode lumineuse (9) qui convient pour émettre de la lumière de plusieurs couleurs.

14. Sous-ensemble d'éclairage selon l'une des revendications 1 à 13, **caractérisé en ce qu'**un réflecteur fixé sur la carte de circuits imprimés (1) est affecté à au moins une disposition de diode lumineuse (2).
